**Europäisches Patentamt**

**European Patent Office**

**Office européen des brevets**

(11) Veröffentlichungsnummer: **0 046 241**
**B1**

(12) ## EUROPÄISCHE PATENTSCHRIFT

(45) Veröffentlichungstag der Patentschrift:
**13.02.85**

(51) Int. Cl.⁴: **G 01 N 21/90,** G 01 B 11/02

(21) Anmeldenummer: **81106143.1**

(22) Anmeldetag: **05.08.81**

(54) **Anordnung zum Feststellen von Unregelmässigkeiten des Randes von Prüflingen.**

(30) Priorität: **18.08.80 DE 3031120**

(43) Veröffentlichungstag der Anmeldung:
**24.02.82 Patentblatt 82/8**

(45) Bekanntmachung des Hinweises auf die Patenterteilung:
**13.02.85 Patentblatt 85/7**

(84) Benannte Vertragsstaaten:
**DE FR NL**

(56) Entgegenhaltungen:
**DE - A - 2 848 316**
**DE - A - 2 916 361**
**FR - A - 2 081 853**
**US - A - 3 818 127**
**US - A - 3 911 212**

(73) Patentinhaber: **Siemens Aktiengesellschaft, Berlin und München Wittelsbacherplatz 2, D-8000 München 2 (DE)**

(72) Erfinder: **Marguerre, Hans-Helmut, Dipl.-Phys., Mähfeldstrasse 23, D-7541 Straubenhardt 4 (DE)**

## Beschreibung

Die Erfindung betrifft eine Anordnung zum Feststellen von Unregelmäßigkeiten des Randes von kreisförmigen Objekten mit einer den Rand beleuchtenden Lichtquelle und einer nach dem Zeilenrastverfahren arbeitenden Fernsehkamera, die so angeordnet sind, daß ein heller Ring von der Fernsehkamera aufgenommen wird und daß Sehnenlängensignale, die den durch die Fernsehzeilen und das Objekt gebildeten Sehnenlängen entsprechen, gebildet und die Sehnenlängensignale oder davon abgeleitete Signale mit Sollwerten verglichen werden, und mit einem in einer Auswerteschatung enthaltenen Vergleicher, dessen einem Eingang das Videosignal der Kamera und dessen anderem Eingang ein Referenzsignal zugeführt ist, wobei bei Abweichungen um mehr als einen vorgegebenen Betrag ein Fehlersignal abgegeben wird.

Bei einer bekannten Anordnung dieser Art (DE-A-2 848 316) werden aus dem Objektbild in der Fernsehkamera Sehnenlängensignale abgeleitet, die beim Schneiden der Rasterzeilen der Fernsehkamera mit dem Objektbild entstehen. Die Länge der Sehnen wird hier durch Abzählen der im Objektbild liegenden Fernsehzeilen ermittelt. Bei einer Abweichung von einem Sollwert der Sehnenlänge kann hier ein Fehlersignal abgegeben werden, mit dem ein fehlerhaftes, zu prüfendes Objekt ermittelt wird.

In der Patentanmeldung DE-A-2 916 361.9 veröffentlicht am 06. 11. 1980, ist eine Anordnung zum Prüfen des Randes von Gefäßen beschrieben, mit welcher der Gefäßrand so beleuchtet wird, daß von einer Fernsehkamera ein heller Ring aufgenommen wird. Aus den durch Abtasten des Ringes in den einzelnen Fernsehzeilen entstehenden Impulspaaren des Videosignals werden Sehnenlängensignale gebildet, die mit Referenzsignalen verglichen werden. Ist der Gefäßrand beschädigt oder verschmutzt, so weist an dieser Stelle der von der Kamera aufgenommene Ring eine Unregelmäßigkeit auf, z. B. ist er eingebuchtet oder unterbrochen. Die Sehnenlängensignale werden daher von den Sollwerten abweichen, und es wird ein Fehlersignal abgegeben werden. Zum Feststellen der vom Ring herrührenden, im Videosignal enthaltenen Impulse ist ein Vergleicher vorgesehen, der das Videosignal mit einem konstanten Referenzsignal vergleicht. Es zeigt sich jedoch, daß die aufgenommenen Ringe häufig unterschiedlich breit und hell sind, z. B., wenn die Rundung des Randes oder dessen Beleuchtung unterschiedlich ist, das Gefäß schief steht oder seitlich zur optischen Achse der Beleuchtungseinrichtung und der Kamera versetzt ist. In diesen Fällen kann der Ring auf der einen Seite breiter und heller sein als auf der anderen. Dies bedeutet, daß die beim Abtasten des Ringes entstehenden Videosignalimpulse unterschiedliche Amplituden haben. Bei einem Vergleich des Videosignals mit einem konstanten Referenzsignals kann daher entweder der Fall eintreten, daß die vom helleren Teil des Ringes herrührenden Impulse vom Vergleicher einwandfrei erfaßt werden, die Impulse des dunkleren Teils dagegen nicht. Stellt man umgekehrt die Amplitude des Referenzsignals auf die niedrigere Impulsamplitude ein, so können Störimpulse aus dem hellen Bereich des Ringes zum Ansprechen des Vergleichers führen.

In der Patentanmeldung EP-A-0 038 033 (Stand der Technik gemäß Artikel 54(3), EPÜ) ist eine Schaltungsanordnung zum Feststellen von Flekken auf einem von einer elektrooptischen Abtasteinrichtung in ein Videosignal umgesetzten Objektbild beschrieben, die das Videosignal nicht mit einem konstanten, sondern mit einem veränderlichen Referenzsignal vergleicht. Dieses Referenzsignal wird mit Hilfe eines Tiefpasses gewonnen, dessen Zeitkonstante kleiner als die Zeilenperiode der Fernsehabtastung ist und über den das Videosignal geführt ist. Mit dieser Maßnahme kann z. B. bei der Prüfung von Flaschen auf Reinheit die unterschiedliche Transmission des Flaschenbodens kompensiert werden. Da am Ende einer Fernsehzeile das Referenzsignal eine andere Größe als am Anfang hat, ist eine Abtast- und Halteschaltung vorgesehen, in welcher die Anfangswerte des Referenzsignals gespeichert werden.

Der vorliegenden Erfindung liegt die Aufgabe zugrunde, eine Anordnung zum Feststellen von Unregelmäßigkeiten des Randes von kreisförmigen Objekten als Prüflinge zu schaffen, bei welcher der Rand als Ring von einer Fernsehkamera aufgenommen wird und der Einfluß unterschiedlicher Helligkeit oder Breite des Ringes und der damit verbundenen unterschiedlichen Amplituden der Videosignale auf die Genauigkeit und Zuverlässigkeit der Anordnung weitgehend beseitigt ist.

Erfindungsgemäß wird diese Aufgabe mit den im kennzeichnenden Teil des Anspruchs 1 angegebenen Maßnahmen gelöst.

Der von der Kamera aufgenommene Ring besteht bezüglich der Fernsehzeilenrichtung aus einer vorderen und einer hinteren Hälfte. Die Kamera liefert in den Abtastzeilen, welche das Bild des Ringes schneiden, im allgemeinen ein Videosignal, das entsprechend den zwei Schnittstellen mit dem Ring zwei Impulse je Zeile aufweist. Der jeweils erste Impuls wird von der ersten, der vorderen Ringhälfte zugeordneten Abtast- und Halteschaltung, der jeweils zweite Impuls von der zweiten, der hinteren Ringhälfte zugeordneten Abtast- und Halteschaltung aufgenommen und gespeichert. Aus den gespeicherten Impulsamplituden werden Referenzsignale gebildet und derart auf den Vergleicher geschaltet, daß beim Abtasten der vorderen Ringhälfte das Referenzsignal von dem in der ersten Abtast- und Halteschaltung enthaltenen Signal abgeleitet ist und beim Abtasten der hinteren Ringhälfte von dem in der zweiten Abtast- und Halteschaltung enthaltenen Signal. Es dienen somit die die jeweiligen Referenzwerte übersteigenden Videosignale als Referenz für die Videosignale der jeweils folgenden Zeile.

Zweckmäßig ist den Abtast- und Halteschaltungen jeweils ein Tiefpaßfilter nachgeschaltet, das die den jeweiligen Referenzwert übersteigenden Videosignale über mehrere Fernsehzeilen integriert. Damit wird erreicht, daß die Referenzsignale aus dem Mittelwert der Videosignale mehrerer Zeilen gebildet werden und nicht schon eine einzelne Störung im Videosignal zu einer Fehlermeldung führt.

Damit die in den Abtast- und Halteschaltungen gespeicherten Signale abwechselnd als Referenzsignale wirksam sind, ist vorteilhaft ein Umschalter vorgesehen, der den Abtast- und Halteschaltungen nachgeschaltet ist und von dessen Ausgangssignalen die Referenzsignale abgeleitet sind. Es kann aber auch jeder Abtast- und Halteschaltung ein Vergleicher nachgeschaltet sein, deren Ausgangssignale abwechselnd zur Weiterverarbeitung durchgeschaltet werden. Der Umschalter muß so gesteuert werden, daß das aus dem bezüglich der Zeilenrichtung vorderen Teil des Ringes gewonnene Referenzsignal mit dem bei der jeweiligen Abtastung des vorderen Ringteils erzeugten Videosignal und entsprechend auch die Referenz- und Videosignale des hinteren Ringteils miteinander verglichen werden.

In einer bevorzugten Ausführungsform wird der Umschalter von den Zeilensynchronimpulsen in die Schaltstellung gebracht, in welcher er das Ausgangssignal der ersten Abtast- und Halteschaltung oder ein davon abgeleitetes Signal zum Vergleicher durchschaltet. Von den beim Abtasten der Fernsehzeilen jeweils ersten Ausgangsimpulsen wird der Umschalter dann in die Schaltstellung gebracht, in welcher er das Ausgangssignal der zweiten Abtast- und Halteschaltung oder ein davon abgeleitetes Signal als Referenzsignal zum Vergleicher durchschaltet.

Damit schon bei den ersten Abtastungen der beiden Ringteile, wenn während einer Bildabtastung zwei getrennte Impulse während einer Zeilenabtastung entstehen, ein Referenzsignal mit für den Vergleich mit dem Videosignal geeigneter Amplitude zur Verfügung steht, ist dem Vergleicher ein Scheitelimpulsdetektor nachgeschaltet, der die beim Abtasten des oberen Scheitels des Ringes auftretenden Impulse erkennt und die Abtast- und Halteschaltungen zur Aufnahme der beim Abtasten des Ringscheitels auftretenden Videosignale freigibt. Die Impulse, die beim Abtasten des oberen Scheitels des Ringes entstehen, haben wegen des tangentialen Verlaufs der Abtastzeilen eine längere Dauer als die Impulse, die in den Abtastzeilen entstehen, welche den Ring unter einem größeren Winkel schneiden. Aus der Impulsdauer kann daher die Abtastung des Scheitels erkannt werden. Die dabei entstehenden Videosignale werden in die beiden Abtast- und Halteschaltungen übernommen. Man kann den Scheitel des Ringes aber auch dadurch bestimmen, daß mit Hilfe eines Zählers festgestellt wird, wann zum erstenmal während einer Bildabtastung zwei gesonderte Impulse auftreten.

Anhand der Zeichnung werden im folgenden die Erfindung sowie weitere Vorteile und Ausgesaltungen näher beschrieben und erläutert.

Figur 1 zeigt den prinzipiellen Aufbau einer Flaschenprüfanlage, in der die erfindungsgemäße Anordnung eingesetzt ist.

In Fig. 2 ist das Prinzipschaltbild eines Ausführungsbeispiels der Erfindung dargestellt.

In Fig. 3 ist mit Impulsdiagrammen die Funktion der Anordnung nach Figur 2 verdeutlicht.

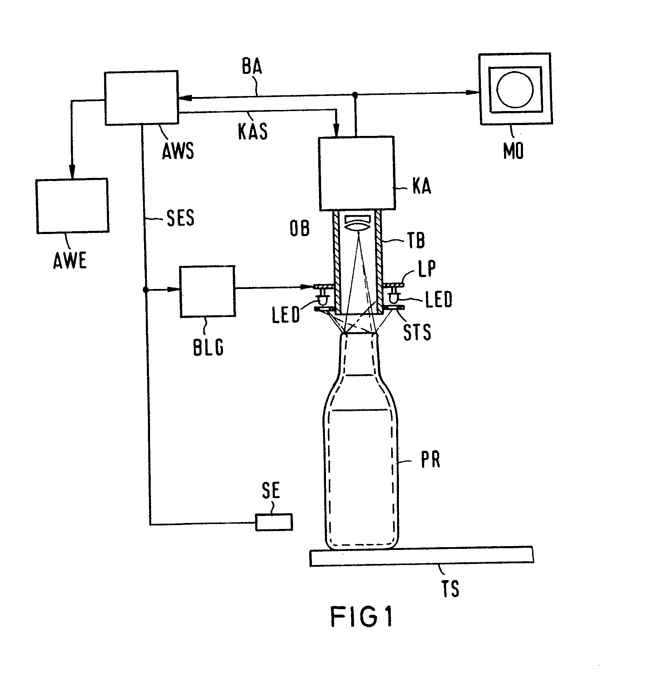

In Figur 1 ist mit PR eine Flasche bezeichnet, deren Öffnung, der sogenannte Flaschenmund, auf Beschädigungen überprüft werden soll. Sie steht auf einer Transportscheibe TS. Die Halterung der Flasche sowie der Antrieb der Transportscheibe sind nicht gezeichnet. Wenn die Flasche PR in der gezeichneten Position ist, kann ihr Flaschenmund von einer Fernsehkamera KA aufgenommen werden. An dieser ist konzentrisch zum Kameraobjektiv OB ein Tubus TB angebracht, an dem eine Leiterplatte LP befestigt ist, an der ein Ring von Lumineszenzdioden LED angeordnet ist, derart, daß die Lumineszenzdioden durch eine Streuscheibe STS den Flaschenmund beleuchten.

Die Position der Flasche PR, in der die Aufnahme des Flaschenmundes durch die Kamera KA möglich ist, wird mit einem Sensor SE festgestellt, der z. B. der Empfänger einer Lichtschranke ist. Sein Ausgangssignal wird einem Blitzlichtgerät BLG zugeführt, das die Lumineszenzdioden LED ansteuert, so daß der Flaschenmund kurzzeitig beleuchtet wird. Ein Bild des Flaschenmundes wird auf die lichtempfindliche Schicht der Aufnahmeröhre der Kamera KA, die z. B. vom Fotoleitfähigkeitstyp ist, projiziert, dort wird ein entsprechendes Ladungsbild erzeugt und gespeichert. Damit dieses Ladungsbild vor der Auswertung in einer an die Kamera KA angeschlossenen Auswerteschaltung AWS nicht gelöscht wird, muß der Abtaststrahl der Aufnahmeröhre gesperrt werden. Ferner ist der Auswerteschaltung AWS anzuzeigen, daß eine Flasche vor dem Sensor SE vorbeigeführt wird und ein Bild zur Auswertung vorliegt. Hierzu wird der Ausgangsimpuls des Sensors SE über eine Leitung SES der Auswerteschaltung AWS zugeführt, die daraufhin über eine Leitung KAS ein Strahlstrom-Sperrsignal auf die Kamera KA gibt. Während der auf die Beleuchtung folgenden Bildperiode der Fernseheinrichtung wird der Elektronenstrahl der Kameraröhre freigegeben und das gespeicherte Ladungsbild abgetastet, und die dabei entstehenden Videosignale werden ausgewertet. Stellt die Auswerteschaltung AWS dabei fest, daß eine Flasche beschädigt ist, so steuert sie eine Auswurfeinheit AWE an, welche die beschädigte Flasche aussortiert.

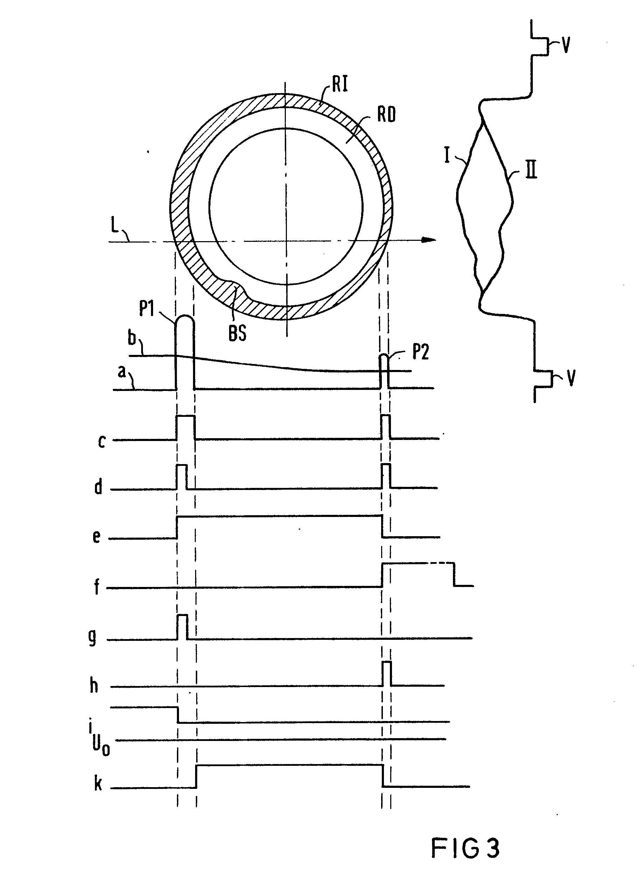

Das von der Kamera KA aufgenommene Bild wird auf einem Monitor MO wiedergegeben. Dieses Bild kann in etwa die in Figur 3 schematisch gezeigte Gestalt haben. Die Kamera KA und die Lichtquelle LED sind so angeordnet, daß der zu prüfende Flaschenmund RD dunkel erscheint, ein diesen umgebender Ring RI dagegen hell. Die Ursache hierfür ist, daß das Licht nicht am Flaschenmund RD, sondern an einem diesen umgebenden Wulst reflektiert wird. In Figur 3 ist angenommen, daß die Achse der Flasche und die optische Achse der Fernsehkamera und der Beleuchtungseinrichtung nicht übereinstimmen. In diesem Falle hat der Ring RI unterschiedliche Breite und Helligkeit. Demgemäß entstehen bei der fernsehmäßigen Abtastung längs einer Zeile L zwei Impulse P1, P2, deren Breite und Amplitude verschieden sind, wie in einem Diagramm a veranschaulicht ist. Mit zwei weiteren Diagrammen I, II, die senkrecht gezeichnet sind, ist der Amplitudenverlauf dieser Impulse über eine Bildperiode veranschaulicht, wobei das Diagramm I den Verlauf der Amplitude für den linken Teil des Ringes RI und Diagramm II für den rechten Teil zeigt. Mit V sind die Bildsynchronimpulse bezeichnet. Es sei erwähnt, daß nicht der helle Ring RI auf Unregelmäßigkeiten überprüft werden soll, sondern der dunkel erscheinende Flaschenmund RD. Liegt eine Beschädigung BS vor, dann wird der Ring RI verändert, er weist z. B. eine Ausbuchtung auf, so daß daran die Beschädigung festgestellt werden kann. Wichtig ist es daher, die Innenseite des Ringes RI zu überwachen. Dies geschieht in der Auswerteschaltung AWS, die z. B. die Länge der Sehnen, welche die Fernsehzeilen mit dem Innenkreis des Ringes RI bilden, mit Sollwerten vergleicht. Hierzu sind zunächst die Impulse des Videosignals festzustellen, die durch Abtasten des Ringes RI gebildet werden.

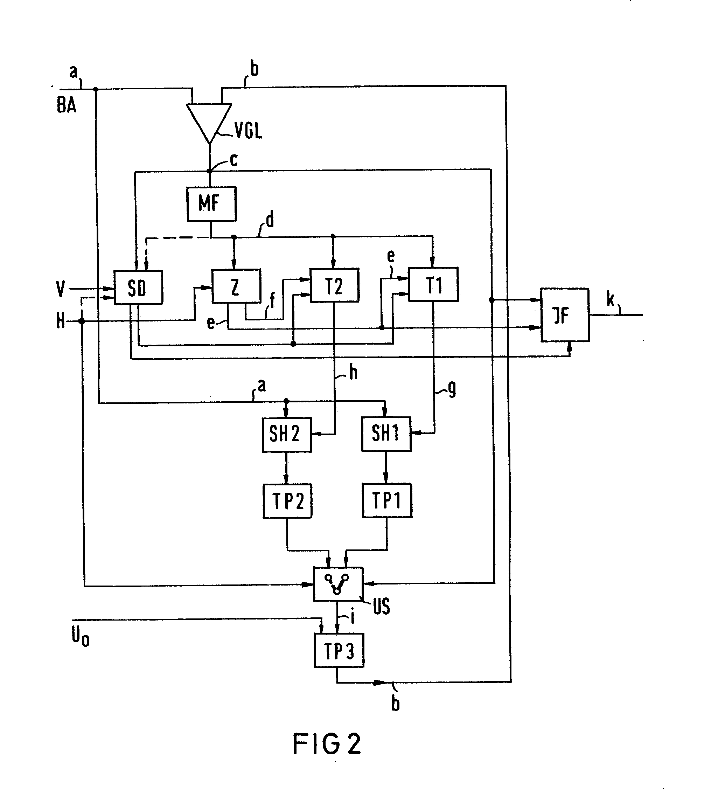

Das Blockschaltbild einer hierzu geeigneten Anordnung ist in Figur 2 gezeigt. An mit in Kreisen gesetzten Buchstaben bezeichneten Stellen treten Impulse auf, deren mit gleichen Buchstaben bezeichnete Zeitdiagramme in Figur 3 dargestellt sind. Auf der Leitung BA, über welche die Videosignale von der Kamera zur Auswerteschaltung geleitet sind, tritt, wie schon oben erwähnt, beim Abtasten der Zeile L das im Diagramm a veranschaulichte Impulspaar P1, P2 auf. Es wird einem Vergleicher VGL zugeführt, der ferner ein Referenzsignal b erhält, das zu den Zeitpunkten der beiden Impulse verschiedene Pegel hat. Solange das Videosignal a das Referenzsignal b übersteigt, gibt der Vergleicher VGL Impulse c ab. In einer Zeitstufe MF werden aus den Impulsen des Vergleichers VGL Impulse konstanter Zeitdauer gebildet, deren Zeitverlauf im Diagramm d dargestellt ist und die zwei Torschaltungen T1, T2 sowie einem Zähler Z zugeführt werden. Die Torschaltungen T1, T2 sind vom Zähler Z gesteuert, der ein Dualzähler ist und auf die positiven Flanken der Ausgangssignale d der Zeitstufe MF anspricht. Mit dem jeweils ersten Impuls einer Zeile gibt er an seinem ersten Ausgang ein Signal e als Freigabesignal auf die Torschaltung T1, die daher den jeweils ersten Impuls der Zeitstufe MF als Steuerimpuls g auf eine erste Abtast- und Halteschaltung SH1 durchschaltet. Diese übernimmt somit den ersten Impuls des Videosignals a. Mit dem zweiten Impuls des Ausgangssignals d der Zeitstufe MF verschwindet das Signal am ersten Ausgang des Zählers Z, und es erscheint ein Signal f an seinem zweiten Ausgang, das die zweite Torschaltung T2 freigibt. Somit gelangt der zweite Ausgangsimpuls der Zeitstufe MF als Steuerimpuls h auf eine zweite Abtast- und Halteschaltung SH2, die den zweiten, kleineren Impuls des Videosignals a übernimmt. Diese Vorgänge wiederholen sich während jeder Abtastzeile. An die Abtast- und Halteschaltungen SH1, SH2 ist je ein Tiefpaßfilter TP1, TP2 angeschlossen, der eine Zeitkonstante von mehreren Zeilenperioden hat. Somit werden die jeweiligen Impulsamplituden von mehreren Zeilen integriert. Der Ausfall einzelner Impulse oder Störimpulse haben daher praktisch keine Wirkung.

An die Ausgänge der Tiefpaßfilter TP1, TP2 sind die beiden Eingänge eines Umschalters US angeschlossen, der von den Horizontalimpulsen H und den Ausgangsimpulsen des Vergleichers VGL geschaltet wird und dessen Ausgangssignal im Diagramm i veranschaulicht ist. Der Horizontalimpuls schaltet ihn in die mit einer durchgezogenen Linie gezeichnete Stellung, so daß das Ausgangssignal des Tiefpasses TP1 auf einen weiteren Tiefpaß TP3 gelangt. Mit dem Ansprechen des Vergleichers wird der Umschalter US in die gestrichelt gezeichnete Stellung gebracht und damit das kleinere Signal des Tiefpasses TP2 auf den Tiefpaß TP3 geschaltet. Dieser bewirkt, daß während des ersten Impulses des Videosignals a praktisch noch das Ausgangssignal des Tiefpasses TP1 als Referenzsignal b dient. Im Tiefpaß TP3 wird zum Ausgangssignal des Umschalters US ein Gleichspannungssignal $U_0$ addiert, dessen Wert etwa gleich dem Schwarzwert des Videosignals ist. Ferner wird das Ausgangssignal des Umschalters US auf einen Pegel gebracht, der im Ausführungsbeispiel etwa gleich der halten Amplitude des Videosignals ist. Von ihm wird das Referenzsignal b abgenommen. Die wechselweise Steuerung der Torschaltungen T1, T2 durch den Zähler Z und die Steuerung des Umschalters US mit den Horizontalimpulsen H und mit dem Vergleicherausgangssignal bewirken, daß für den jeweils ersten Impuls des Videosignals der jeweils abzutastenden Zeile die Amplituden der jeweils ersten Impulse der davor abgetasteten Zeilen zur Bildung des Referenzsignals herangezogen werden und daß entsprechend die jeweils zweiten Impulse mit Referenzsignalen verglichen werden, die aus den Amplituden der zweiten Impulse der jeweils davor abgetasteten Zeilen abgeleitet sind. Unterschiedliche Amplituden der beiden in einer Zeilenperiode auftretenden Impulse haben daher keinen Einfluß auf die Ansprechgenauigkeit des Vergleichers VGL.

Damit schon im Bereich des oberen Scheitels des Randes RD ein Referenzsignal mit für einen Vergleich mit dem Videosignal geeigneter Amplitude zur Verfügung steht, ist ein Scheiteldetektor SD vorgesehen, dem die Ausgangssignale des Vergleichers VGL und/oder der Zeitstufe MF zugeführt sind und der ferner das Vertikalsignal V und gegebenenfalls das Horizontalsignal H erhält. In einer Ausführungsform in der er über eine mit einer durchgezogenen Linie dargestellten Leitung mit dem Vergleicher VGL verbunden ist, besteht er im wesentlichen aus einem Impulsbreitendiskriminator, im anderen Falle, in dem er über gestrichelt gezeichnete Leitungen die Ausgangsimpulse der Zeitstufe MF und die Horizontalimpulse H erhält, stellt er fest, wann zum erstenmal während einer Bildperiode innerhalb einer Zeilenperiode zwei Impulse auftreten. Es ist deshalb zweckmäßiger, ihn in diesem Falle an die Zeitstufe MF anzuschließen, weil deren Ausgangsimpulse im Bereich der Scheitel einen größeren zeitlichen Abstand haben als die des Vergleichers VGL. In beiden Fällen wird er von den Vertikalimpulsen V während des Bildrücklaufs zurückgesetzt. Erreicht die Abtastung den oberen Scheitel des Ringes RI, hat das Videosignal eine Impulsdauer, die sonst nur noch beim Abtasten des unteren Scheitels auftritt. Der im Scheiteldetektor SD enthaltene Impulsbreitendetektor setzt eine bistabile Kippstufe, und es wird auf Torschaltungen T1, T2 ein Freigabesignal gegeben, so daß die Abtast- und Halteschaltungen SH1, SH2 das Videosignal übernehmen, aus dem dann das Referenzsignal gebildet wird. Der Scheiteldetektor kann auch einen Dualzähler enthalten, der mit jedem Horizontalimpuls H rückgesetzt wird. Stellt der Zähler fest, daß während einer Zeilenperiode zwei Impulse auftreten, gibt er das Freigabesignal auf die Torschaltungen T1, T2. Weitere Modifikationen des Scheiteldetektors sind möglich; z. B. kann ein Impulsbreitendetektor, der nur auf solche Impulse, die im Scheitelbereich auftreten, anspricht, einen Dualzähler vorbereiten, der dann, wenn zwei Impulse während einer Zeilenperiode im Videosignal enthalten sind, das Signal für die Torschaltungen T1, T2 abgibt.

Außer dem Freigabesignal für die Torschaltungen T1, T2, das sich nur über eine Zeilenperiode zu erstrecken braucht, liefert der Scheiteldetektor SD ein Freigabesignal für einen Impulsformer IF, das vom Erkennen des oberen Scheitels bis zum Feststellen des unteren Scheitels dauert. Der untere Scheitel kann ebenfalls mittels des Impulsbreitendiskriminators oder dadurch festgestellt werden, daß die Impulspaare verschwinden. Der Impulsformer IF dient zum Erzeugen von Sehnenlängensignalen k, bei deren Abweichen von vorgegebenen Sollwerten ein Fehlersignal abgegeben wird.

**Patentansprüche**

1. Anordnung zum Feststellen von Unregelmäßigkeiten des Randes von kreisförmigen Objekten (PR)

— mit einer den Rand beleuchtenden Lichtquelle (LED) und einer nach dem Zeilenrasterverfahren arbeitenden Fernsehkamera (KA), die so angeordnet sind, daß ein heller Ring von der Fernsehkamera (KA) aufgenommen wird und daß Sehnenlängensignale (k), die den durch die Fernsehzeilen und das Objekt (PR) gebildeten Sehnenlängen entsprechen, gebildet und die Sehnenlängensignale oder davon abgeleitete Signale mit Sollwerten verglichen werden,

— und mit einem in einer Auswerteschaltung (AWS) enthaltenen Vergleicher (VGL), dessen einem Eingang das Videosignal (a) der Kamera (KA) und dessen anderem Eingang ein Referenzsignal (b) zugeführt ist,

— wobei bei Abweichungen um mehr als einen vorgegebenen Betrag ein Fehlersignal abgegeben wird, dadurch gekennzeichnet, daß

— das Videosignal (a) der Kamera ferner einer ersten und einer zweiten Abtast- und Halteschaltung (SH1, SH2) zugeführt ist, die vom Ausgangssignal (c) des Vergleichers (VGL) oder einem davon abgeleiteten Signal (g, h) derart gesteuert sind, daß die erste Abtast- und Halteschaltung (SH1) jeweils zur Aufnahme des Videosignals freigegeben ist, wenn in einer Zeilenperiode das Videosignal (a) zum erstenmal das Referenzsignal (b) übersteigt, und daß

— die zweite Abtast- und Halteschaltung (SH2) zur Aufnahme des Videosignals freigegeben ist, wenn das Videosignal (a) zum zweitenmal in einer Zeilenperiode das Referenzsignal (b) übersteigt, daß

— während je einer Zeilenperiode das Ausgangssignal der ersten Abtast- und Halteschaltung (SH1) oder ein davon abgeleitetes Signal dem Vergleicher (VGL) als erstes Referenzsignal zum Vergleicher mit dem das Referenzsignal erstmalig übersteigenden Videosignal und das Ausgangssignal der zweiten Abtast- und Halteschaltung (SH2) oder ein davon abgeleitetes Signal als zweites Referenzsignal zum Vergleich mit dem das Referenzsignal zum zweitenmal übersteigenden Videosignal zugeführt ist.

2. Anordnung nach Anspruch 1, dadurch gekennzeichnet, daß den Abtast- und Halteschaltungen (SH1, SH2) jeweils ein Tiefpaßfilter (TP1, TP2) mit einer Zeitkonstante von einigen Zeilenperioden nachgeschaltet ist.

3. Anordnung nach Anspruch 1 oder 2, dadurch gekennzeichnet, daß den Abtast- und Halteschaltungen (SH1, SH2) die beiden Eingänge eines Umschalters (US) nachgeschaltet sind, von dessen Ausgangssignal die Referenzsignale abgeleitet sind.

4. Anordnung nach Anspruch 3, dadurch gekennzeichnet, daß der Umschalter (US) von den Zeilensynchronimpulsen (H) in die Schaltstellung gebracht ist, in der er das Ausgangssignal der ersten Abtast- und Halteschaltung (SH1) oder ein davon abgeleitetes Signal als Referenzsignal zum Vergleicher (VGL) durchschaltet, und von dem in den Zeilenperioden jeweils ersten Ausgangssignal des Vergleichers oder einem davon abgeleiteten Signal in die Schaltstellung gebracht ist, in der er das Ausgangssignal der zweiten Abtast- und Halteschaltung (SH2) oder ein davon abgeleitetes Signal als Referenzsignal zum Vergleicher (VGL) durchschaltet.

5. Anordnung nach einem der Ansprüche 1 bis 4, dadurch gekennzeichnet, daß die Referenzsignale über einen Tiefpaß (TP3) geführt sind, dessen Zeitkonstante kleiner als die Zeilenperiode und größer als die Dauer der Ausgangsimpulse des Vergleichers ist.

6. Anordnung nach einem der Ansprüche 1 bis 5, dadurch gekennzeichnet, daß dem Vergleicher (VGL) ein Scheiteldetektor (SD) nachgeschaltet ist, der die beim Abtasten des oberen Scheitels des Randes auftretenden Impulse erkennt und die Abtast- und Halteschaltungen (SH1, SH2) zur Aufnahme der beim Abtasten des Scheitelrandes auftretenden Impulse freigibt.

7. Anordnung nach Anspruch 6, dadurch gekennzeichnet, daß den Steuereingängen der Abtast- und Halteschaltungen (SH1, SH2) je eine Torschaltung (T1, T2) vorgeschaltet ist, die von einem die Ausgangsimpulse des Vergleichers über je eine Zeilenperiode aufsummierenden Zähler wechselweise und vom Scheiteldetektor (SD) gemeinsam freigegeben sind.

## Claims

1. An arrangement for determining peripheral irregularities of circular objects (PR)

— having a light source (LED) which illuminates the periphery, and a television camera (KA) which operates with a line scanning pattern and is so arranged that a bright ring is picked up by the television camera (KA), and that chord length signals (k) corresponding to the chord lengths formed by the television line scanning of the object (PR) are formed and the chord length signals or signals derived therefrom are compared with theoretical values;

— and having in an evaluating circuit (AWS) a comparator (VGL) to one input of which the video signal (a) of the camara (KA) is fed, its other input being supplied with a reference signal (b);

— where an error signal is transmitted in the event of deviations exceeding a predetermined amount;
characterised in that

— the video signal (a) of the camera is also fed to first and second scanning-and-holding circuits, (SH1, SH2) controlled by the output signal (c) of the comparator (VGL) or by a signal (g, h) derived therefrom, in such a manner that the first scanning-and-holding circuit (SH1) is respectively released for the reception of the video signal when the video signal (a) exceeds the reference signal (b) for the first time in a line period;

— the second scanning-and-holding circuit (SH2) is released for the reception of the video signal when the video signal (a) exceeds the reference signal (b) for the second time in a line period; and

— during a line period the output signal of the first scanning-and-holding circuit (SH1) or a signal derived therefrom is fed to the comparator (VGL) as a first reference signal for the video signal comparison to detect when it exceeds the reference signal for the first time, and the output signal of the second scanning-and-holding circuit (SH2) or a signal derived therefrom is fed to the comparator (VGL) as a second reference signal for the video signal comparison to detect when it exceeds the reference signal for the second time.

2. An arrangement as claimed in claim 1, characterised in that the scanning-and-holding circuits (SH1, SH2) are followed by respective low-pass filters (TP1, TP2) with a time constant of several line periods.

3. An arrangement as claimed in claim 1 or claim 2, characterised in that the scanning-and-holding circuits (SH1, SH2) lead to the two inputs of a change-over switch (US), from whose output signal the reference signals are derived.

4. An arrangement as claimed in claim 3, characterised in that the change-over switch (US) is brought into the position in which it switches the output signal of the first scanning-and-holding circuit (SH1) or a signal derived therefrom to the comparator (VGL) as a reference signal by line synchronising pulses (H), and is brought into the position in which it switches the output signal of the second scanning-and-holding circuit (SH2) or a signal derived therefrom to the comparator (VGL) as a reference signal by the first output signal of the comparator in the respective line period, or by a signal derived therefrom.

5. An arrangement as claimed in one of claims 1 to 4, characterised in that the reference signals are fed via a low-pass filter (TP3) whose time constant is smaller than the line period and greater than the duration of the output pulses of the comparator.

6. An arrangement as claimed in one of claims 1 to 5, characterised in that the comparator (VGL) is followed by a peak detector (SD) which recognises the pulses which occur during the scanning of the upper peak of the periphery, and which peak detector releases the scanning-and-holding circuits (SH1, SH2) for the reception of the pulses which occur during the scanning of the peripheral peak.

7. An arrangement as claimed in claim 6, characterised in that the control inputs of the scanning-and-holding circuits (SH1, SH2) are preceded by respective gate circuits (T1, T2) which are alternately released by a counter, which sums up the output pulses of the comparator over one line period, and which are commonly released by the peak detector (SD).

## Revendications

1. Dispositif pour déterminer des irrégularités du bord d'objets de forme circulaire (PR)

— comportant une source de lumière (LED) éclairant le bord, une caméra de télévision (KA) opérant selon le procédé à trame de lignes, la source de lumière et la caméra étant disposées de telle sorte qu'un anneau clair est enregistré par la caméra de télévision (KA) et que des signaux (k) de longueurs de cordes, qui correspondent aux longueurs de cordes formées par les lignes de télévision et par l'objet (PR) sont formés et que les signaux de longueurs de cordes ou des signaux qui en sont dérivés, sont comparés à des valeurs de consigne,
— et comportant un comparateur (VGL) contenu dans un circuit d'exploitation (WS) et à une entrée duquel est envoyé le signal vidéo (a) de la caméra (KA) et à l'autre entrée duquel est envoyé un signal de référence (b),
— un signal d'erreur étant délivré dans le cas d'écarts supérieurs à une valeur prédéterminée,
caractérisé par le fait que
— le signal vidéo (a) de la caméra est en outre appliqué à un premier et un second circuits d'exploration et de maintien (SH1, SH2), qui sont commandés par le signal de sortie (c) du comparateur (VG1) ou par un signal (g, h) dérivé de ce signal, de telle sorte que le premier circuit d'exploration et de maintien (SH1) est libéré respectivement pour la réception du signal vidéo lorsqu'au cours d'une période d'une ligne le signal vidéo (a) dépasse pour la première fois le signal de référence (b), et que
— le second circuit d'exploration et de maintien (SH2) est libéré pour la réception du signal vidéo lorsque le signal vidéo (a) dépasse pour la seconde fois le signal de référence (b) au cours d'une période d'une ligne, que
— pendant chaque période d'une ligne, le signal de balayage du premier circuit d'exploration et de maintien (SH1) ou un signal qui en est dérivé, est envoyé au comparateur (VGL) en tant que premier signal de référence pour la comparaison avec le signal vidéo dépassant pour la première fois le signal de référence, et le signal de sortie du second circuit d'exploration et de maintien (SH2) ou un signal qui en est dérivé, est envoyé en tant que second signal de référence pour la comparaison avec le signal vidéo dépassant pour la seconde fois le signal de référence.

2. Dispositif suivant la revendication 1, caractérisé par le fait que des filtres passe-bas respectifs (CP1, CP2), possédant une constante de temps de quelques périodes de ligne, sont branchés en aval des circuits d'exploration et de maintien (SH1, SH2).

3. Dispositif suivant la revendication 1 ou 2, caractérisé par le fait que les deux entrées d'un inverseur (US), à partir du signal de sortie duquel sont dérivés les signaux de référence, sont branchées en aval des circuits d'exploration et de maintien (SH1, SH2).

4. Dispositif suivant la revendication 3, caractérisé par le fait que le commutateur (US) est placé par les impulsions de synchronisation de ligne (H) dans la position de commutation, dans laquelle il transmet directement le signal de sortie du premier circuit d'exploration et de maintien (SH1) ou un signal dérivé de ce dernier, en tant que signal de référence au comparateur (VGL), et est placé par le premier signal de sortie, intervenant pendant la période d'une ligne, du comparateur ou bien par un signal dérivé de ce dernier, dans la position de commutation, dans laquelle il transmet directement le signal de sortie du second circuit d'exploration et de maintien (SH2) ou un signal dérivé de ce dernier, en tant que signal de référence au comparateur (VGL).

5. Dispositif suivant l'une des revendications 1 à 4, caractérisé par le fait que les signaux de référence passent par un filtre passe-bas (TB3) dont la constante de temps est inférieure à la période de ligne et est supérieure à la durée des impulsions de sortie du comparateur.

6. Dispositif suivant l'une des revendications 1 à 5, caractérisé par le fait qu'en aval du comparateur (VGL) est branché un détecteur de sommet (SD) qui identifie les impulsions apparaissant lors de l'exploration du sommet du bord et libère les circuits d'exploration et de maintien (SH1, SH2) pour l'enregistrement des impulsions apparaissant lors de l'exploration du sommet du bord.

7. Dispositif suivant la revendication 6, caractérisé par le fait quén amont des entrées de commande des circuits d'exploration et de maintien (SH1, SH2) se trouvent branchés respectivement des circuits de porte (T1, T2) qui sont libérés alternativement par un compteur effectuant la somme des impulsions de sortie du comparateur pendant une période d'une ligne, et en commun par le détecteur de sommet (SD).

FIG 1

FIG 2

FIG 3